# EUROPEAN PATENT APPLICATION

(11) **EP 1 803 640 A1**
(43) Date of publication of application: **04.07.2007**
(21) Application number: 05793421.8
(22) Date of filing: 17.10.2005
(51) Int. Cl.: B63B 9/00, E04G 21/14, G01C 15/00, G08C 17/00

(54) **STRUCTURE ASSEMBLING METHOD EMPLOYING ELECTRONIC TAG WITH POSTURE SENSOR AND STRUCTURE ASSEMBLING APPARATUS, AND DATA STORAGE FOR MAINTAINING STRUCTURE**

(30) Priority: 15.10.2004 JP 2004300841
(71) Applicant: Intellectual Property Bank Corp., 1-21-19, Toranomon, Minato-ku Tokyo 1050001 (JP)
(72) Inventor: MARUI, Tomohiro, Minato-ku, Tokyo 1050001 (JP); KUROSAWA, Nobuyoshi, Minato-ku, Tokyo 1050001 (JP)
(74) Representative: Grünecker, Kinkeldey, Stockmair & Schwanhäusser Anwaltssozietät
(86) International application number: PCT/JP2005/019011
(87) International publication number: WO 2006/041180

(57) **Abstract**

A method and apparatus for performing field assembling (high precision alignment) work efficiently by eliminating any work miss in structural component assembling work where 180°turning state is expected and grasping the connecting/assembling posture (inclination) conditions of many components systematically in order to assist automation of assembling work of a structure and automatic crane control. A data sampling/recording (data logging) device for maintaining the assembled structure is also provided. The data includes vibration data on a multistory building at the time of an earthquake, deflection data on a vessel structure due to high waves, and the like. A state that the components of a structure are arranged to share common horizontal/vertical directions is the completed state of the structure. The reference lines of two components may not be aligned before the two components are interconnected, and they are only required to be moved in the direction in which the vector difference between the reference lines decreases. Since the posture changes through the movement, an electronic tag with a posture sensor for measuring the posture data in real time is attached to each structural component, and the moving means is feedback controlled in real time.

## Description

### TECHNICAL FIELD

The present invention relates to a technique applying an electronic tag with a sensor, a structure assembling method and a structure assembling apparatus for a large-sized structure such as a building, a bridge, or a vessel, and data storage for maintaining a structure. Here, the electronic tag means a tag having a built-in IC chip and antenna, and by storing therein unique identification information or the like and reading and writing the identification information or the like via radio waves, it is possible to provide an "automatic recognition system." Usage of radio waves allows non-contact reading and writing and simultaneously reading information of a plurality of tags. The electronic tag, an IC tag, a radio electronic tag, and a radio IC tag are all the same. The assembly of a large-sized structure includes work that requires a precise alignment, what is called a high-precision alignment.

### BACKGROUND ART

Electronic tags mainly have the following features, such as being capable of transmitting data, operating even without a battery, it is also possible to embed a thin and small type in an object, a large variety of types exist from a low-price product with only an ID readout function to a highly-functional product cable of reading and writing information, and the like. It is expected that electronic tags will have a wide range of applications by taking advantage of their excellent features and a wide variety of electronic tags have been put into practical use according to their application scenarios and purposes thereof. There are some forms, such as one written with only ID information, one having an information writable memory area, one that requires a power supply, and one that requires no power supply. For example, a noncontact IC card represented by "Suica (trademark)" of East Japan Railway Company (JR East) is also a form of electronic tag.

The information receiving/transmitting apparatus described in Patent Document 8 that has been filed by the inventor is also a form of electronic tag, and is an applied technology of an electronic tag with a sensor. Patent Document 8 provides a communications apparatus that remotely transmits fixed information defined by a user, which is an extremely simple communications tool using an object taking a plurality of static attitudes disposed with a three-axis attitude sensor (three-axis acceleration sensor). Hereinafter, Patent Document 8 being one of the background arts of the present invention will be described.

As examples of the fixed information, fixed information as to whether a branch of a financial institution or the like or a solitary elderly person is in an emergency, fixed information on the whereabouts of an office worker such as in attendance, in a meeting, returned home, fixed menu order information in a restaurant, spots on a die can be mentioned. Patent Document 8 provides a simple communications apparatus using, as a transmission tool, a handy and familiar object producing a sense of affinity such as a rectangular parallelepiped or a sphere as well as an object excellent in design.

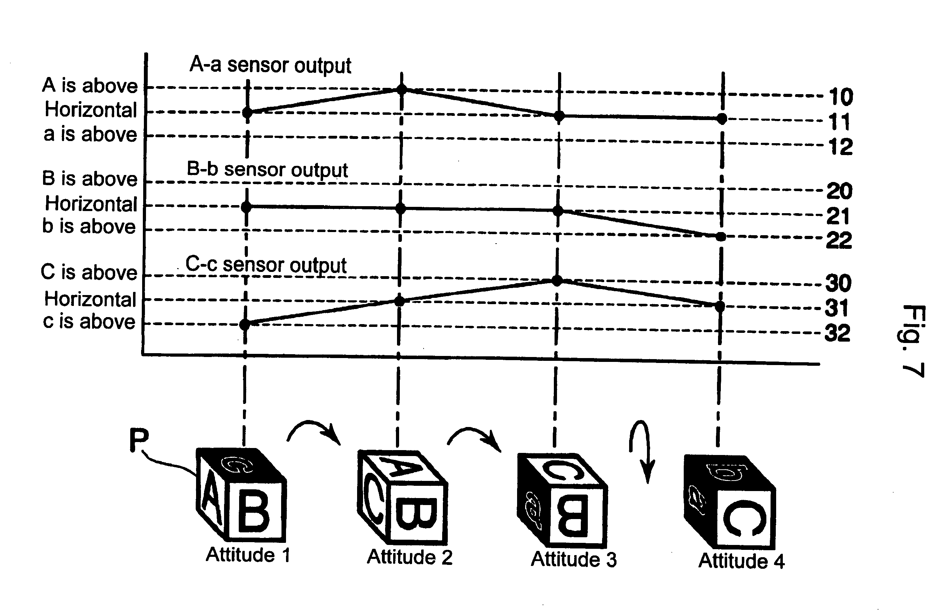

A widely known three-axis acceleration sensor (three-axis attitude sensor) will be described in Fig. 7. A three-axis attitude sensor P is a combination of three elements each of which detects a mechanical deflection of a part of a disposition. That is, elements to detect deflections are fixed in directions of an A-a axis, a B-b axis, and a C-c axis schematically shown by regular hexahedrons of Fig. 7 or to a surface spread by each axis. These elements detect mechanical deflection in each direction. Even if respective deflection detecting axes are not always orthogonal to each other, a three dimensional attitude and a three-dimensional acceleration are determined by a linear conversion of axial direction information as long as these are not parallel to each other (see Patent Document 6 etc).

The element to detect a deflection is a material having a piezoelectric effect, and produces an electrical signal according to a mechanical deflection. By disposing three such piezoelectric elements on three nonparallel axes, a three-dimensional attitude can be distinguished based on outputs of those elements. That is, different deflection outputs are obtained in different attitudes, such as with regard to an attitude 1 of Fig. 7, an output of the A-a axis deflection detecting element is 11, an output of the B-b axis deflection detecting element is 21, and an output of the C-c axis deflection detecting element is 32 (this is abbreviated to (11, 21, 32), with regard to an attitude 2, (10, 21, 31), with regard to an attitude 3, (11, 21, 30), and with regard to an attitude 4, (11, 22, 31). The attitudes 1, 2, 3, and 4 can be distinguished based on these outputs. It is also possible to detect acceleration in the same manner as deflection. Description thereof will be omitted.

A three-dimensional attitude/three-dimensional acceleration sensor is known, and includes, for example, a "piezoresistive-type triaxial accelerating sensor" by Hitachi Metals, Ltd. This is formed by three-dimensionally incorporating three elements into an ultra-compact/ultra-slim IC chip by an MEMS (micromachine) technology as an analog sensor package.

It is known to dispose a three-dimensional attitude/three-dimensional acceleration sensor on a movable object such as an automobile or a train and detect/analyze an attitude/motion (acceleration) of the movable object. The purpose of the detection/analysis is control, accident prevention of the movable object, or the like (see Patent Document 1). Although being a usage similar to this, it is also known to dispose a three-dimensional attitude/three-dimensional acceleration sensor on a door or a window and detect an attitude/motion (acceleration) thereof for usage as a burglarproof sensor (see Patent Document 5).

It is also known to mount a three-dimensional attitude/three-dimensional acceleration sensor on a living body to detect and analyze an attitude (acceleration) thereof (see Patent Documents 1 and 2). Such a detection/analysis is for the purpose of healthcare, disease prediction, an improvement/training of exercise motion such as rehabilitation and an athletic training, or confirmation of safety of a solitary elderly person. In this case, a vital sensor to detect a body temperature, a heartbeat, a pulse wave, breath, etc., may also be mounted on the living body. On the other hand, for convenience of orders and rationalization of order management in a restaurant as one of the technical applications of Patent Document 8, there are examples of a remote communications technology using a portable terminal (see Patent Documents 3 and 4).

The present invention relates to a structure assembling method and a structure assembling apparatus for a large-sized structure such as a building, a bridge, or a vessel. Even at a structure construction site as with the present invention, use of an electronic tag has begun (see Patent Document 10). However, there is not yet an actual example of an application of an electronic tag having an attitude sensor (see Patent Documents 7 and 9).

A large-sized structure is composed of a plurality of a wide variety of components (hereinafter, described as "structural components"). The structural components are combined and coupled to assemble a structure. For example, Fig. 1 is an example of assembly of a vessel, and Fig. 3, of a building. For such assembling work, a crane is used. There is a field of control technologies "automation of a crane (suspension load work)." Patent Document 7 is an example of the automation technology (see Fig. 5 and Fig. 6). Moreover, depending on the combination of structural components, a precise alignment called a high-precision alignment may be required.

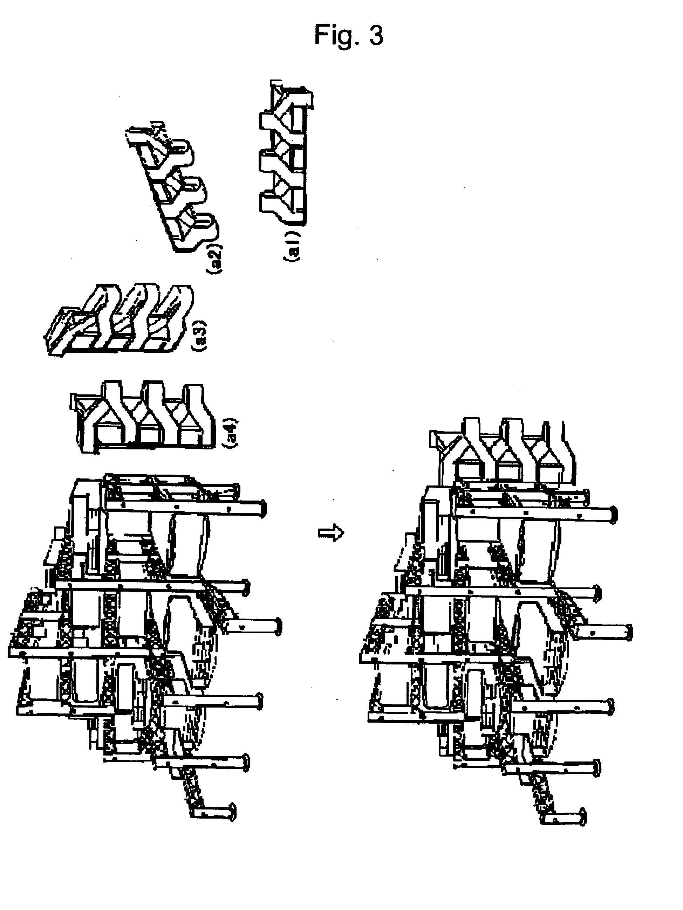

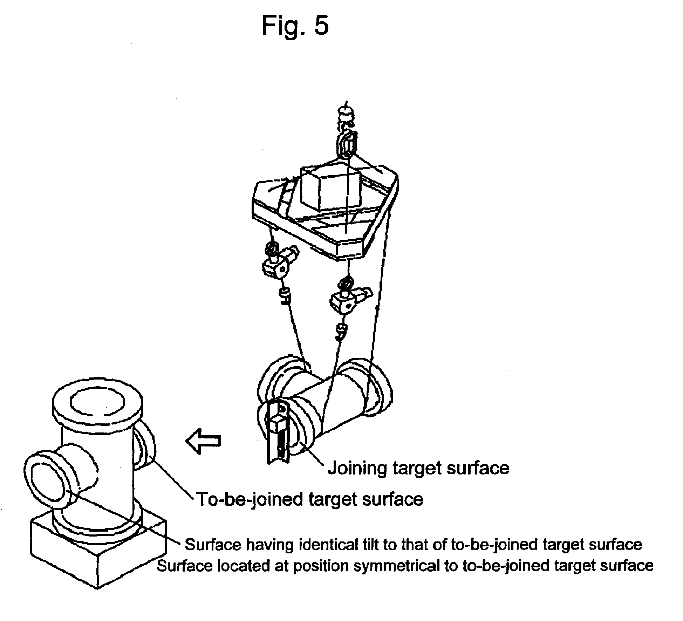

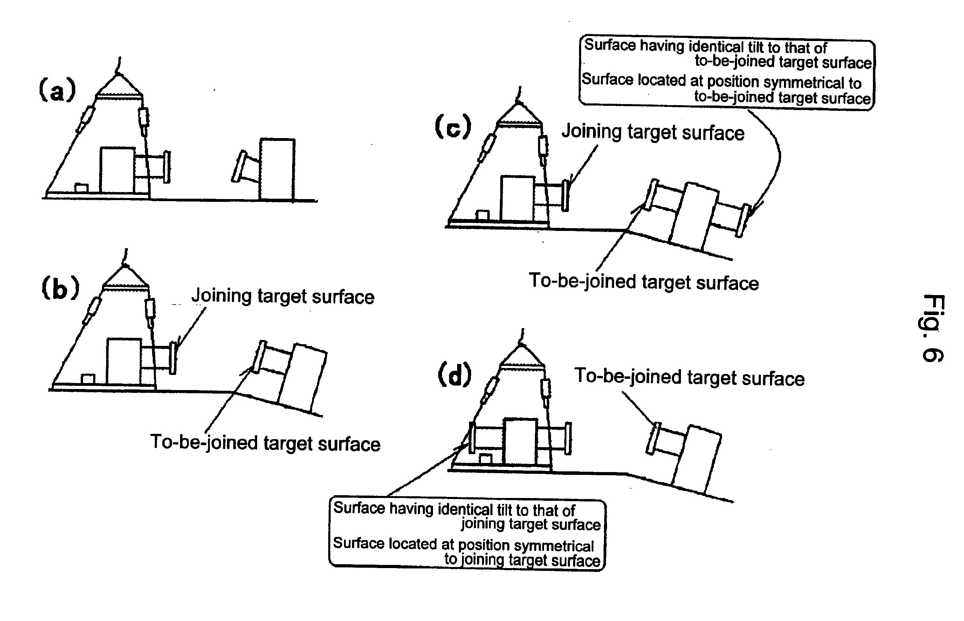

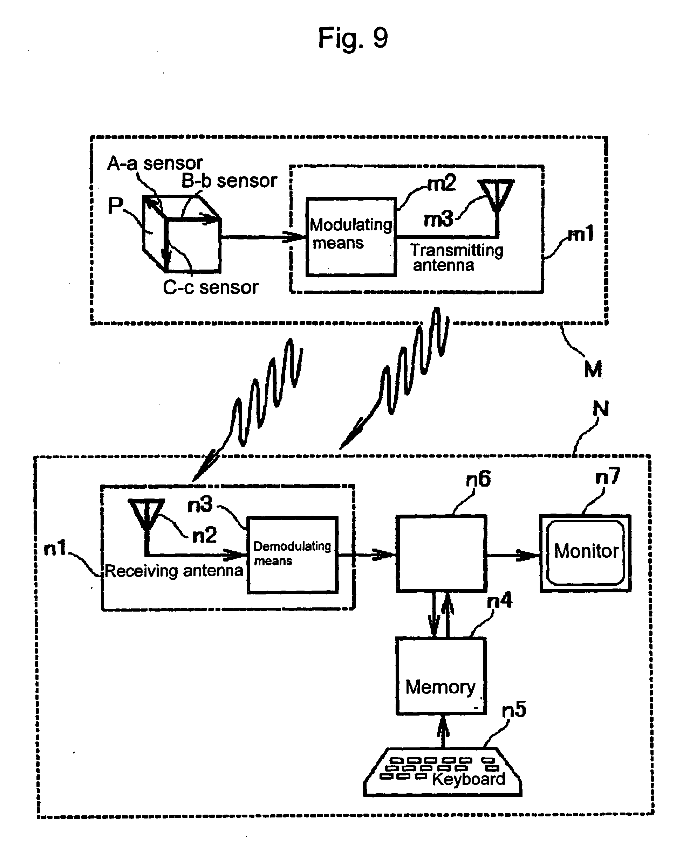

Fig. 5 is an explanatory view of an auxiliary device for a hanging work of Patent Document 7 (Fig. 3 of Patent Document 7), and Fig. 6 are explanatory views of problems of a hanging work (Fig. 9 of Patent Document 7). In Fig. 6, (a) is an example where a connection surface of a structural component is tilted, and (b) is an example where the installation surface of a structural component is not horizontal, and an attitude (tilt) sensor is disposed on a joining target surface of a structural component as in Fig. 5. The components are joined for assembly by conducting a tilting drive so as to match data on a to-be-joined surface for which attitude (tilt) data has been measured in advance with tilt measurement data of the sensor on the target surface. This is said to make it easy to conduct a joining/assembling work of components to each other even in such cases of Fig. 6(a) and (b).
Patent Document 1: Japanese Published Unexamined Patent Application No. H10-113343 "METHOD, DEVICE AND SYSTEM FOR RECOGNIZING ACTION AND BEHAVIOR" Hitachi, Ltd.
Patent Document 2: Japanese Published Unexamined Patent Application No. 2004-096630 "LIFE CONDITION AND ENVIRONMENT EXPRESSION APPARATUS, EXPRESSION APPARATUS AND LIFE CONDITION AND ENVIRONMENT EXPRESSION METHOD" Sekisui Chemical Co., Ltd.
Patent Document 3: Japanese Patent No. 2869720 "ORDER MANAGEMENT SYSTEM IN RESTAURANT" NITSUKO Corporation
Patent Document 4: Japanese Published Unexamined Patent Application No. 2002-219044 "FOOD AND DRINK ORDERING APPARATUS IN RESTAURANT" KURA CORPORATION
Patent Document 5: Japanese Published Unexamined Patent Application No. H11-316881 "BURGLARPROOF SENSOR" OMRON Corporation
Patent Document 6: Japanese Published Unexamined Patent Application No. H09-005104 "METHOD AND APPARATUS FOR MEASUREMENT OF THREE-DIMENSIONAL ATTITUDE ANGLE OF MOVING BODY" NIPPON TELEGRAPH AND TELEPHONE CORPORATION
Patent Document 7: Japanese Published Unexamined Patent Application No. 2004-067355 "AUXILIARY DEVICE FOR HANGING WORK, INCLINATION ANGLE SENSOR TOOL AND AUXILIARY METHOD FOR HANGING WORK" Mitsubishi Electric Corporation
Patent Document 8: Japanese Patent Application No. 2004-247996 "APPARATUS FOR COMMUNICATING STEREOTYPE INFORMATION RELATED TO ATTITUDE OF OBJECT" Intellectual Property Bank Corp. et al. (PCT/JP2005/015641)
Patent Document 9: Japanese Published Unexamined Patent Application No. H08-324958 "METHOD AND DEVICE FOR CONTROLLING SUSPENSION LOAD ATTITUDE" TAMAGAWA SEIKI CO., LTD
Patent Document 10: Japanese Published Unexamined Patent Application No. 2001-140467 "CONSTRUCTION WORK SUPPORT SYSTEM" Hitachi Plant Engineering & Construction Co., Ltd.

### DISCLOSURE OF THE INVENTION

### PROBLEMS TO BE SOLVED BY THE INVENTION

For example, for reasons, such as in Fig. 6(c) that it is confusing that a surface having an identical tilt to that of a to-be-joined target surface being a component joining destination exists at a symmetrical position, and to the contrary, as in Fig. 6(d) that it is still confusing that a surface having an identical tilt to that of a joining target surface exists at a symmetrical position, crane control errors easily occur. Conventionally, these errors could not have been completely eliminated. Furthermore, a joining target mistake is easily made when the structural component to be joined is in an inverted state turned 180 degrees, and in particular, when a different surface with a difference in angle of 90 degrees from a correct joint surface exists nearby. Similarly, a to-be-joined structural component being a joining destination is temporarily located in an inverted state turned 180 degrees, a mistake of joining a different surface with a difference in angle of 90 degrees from a correct joint surface is easily made if such a surface exists in components that are in motion.

In shipyards, it is often the case that an assembling work is carried out with the structural components turned 180 degrees for reduction in assembly time, work safety, and avoiding damage to components. For example, for a main engine of a propeller, joining/assembly is sometimes carried out with ship bottom components turned 180 degrees and the main engine itself also turned 180 degrees.

Moreover, in building sites as well, it is often the case that prefabricated structural components are temporarily located in an inverted state turned 180 degrees depending on the shapes thereof. In such an assembling work where a state turned 180 degrees is assumed, it becomes necessary for a crane operator to operate a crane while carefully performing a visual check, which has been an obstruction to automation and an obstruction to a reduction in process time.

Furthermore, as a matter of course, in large-sized vessels (tankers) and large-sized buildings (multistory buildings), since a variety of components are joined in various attitudes (tilts), conditions of target components out of the joining/assembling attitude (tilt) conditions of thousands and tens of thousands of components must be grasped every time on the spot. Field work takes time and causes a problem unless it is made so that conditions such as tilts of joint surfaces are easily inputted in a unified manner from designing stage and the input data can be easily used on the spot.

The present invention proposes a method and apparatus that can eliminate a work mistake in structural component assembling work where a state turned 180 degrees is assumed and allows performing field joining/assembly efficiently by grasping attitude (tilt) conditions of many components in a unified manner in view of automation of assembly work of a structure and automation of crane control. Furthermore, although this is a secondary theme, the present invention also provides a data sampling/recording (data logging) device for maintaining an assembled structure. The data includes vibration data on a multistory building at the time of an earthquake, deflection data on a vessel structure due to high waves, and the like.

### MEANS FOR SOLVING THE PROBLEMS

The present invention has been made based on a recognition that joining a surface of one structural component of a structure and a surface of another structural component by mating requires three-dimensional attitude information concerning each other's surface, and information is often insufficient with conventional systems. In order to eliminate a joining mistake even with the aforementioned state turned 180 degrees, it is sufficient to grasp attitude information concerning each component by "two vector quantities." A surface spread by the two vector quantities has uniqueness and also allows distinguishing front and rear sides in space (a front condition and a rear condition can be distinguished based on vector directions), so that a joining mistake can be avoided even with the aforementioned state turned 180 degrees. Moreover, the present invention has been made based on a recognition that unified information addition related to "horizontal/vertical vectors" being common conditions from the time of design to construction should be applied to components of a structure. That is, it has been made based on a recognition that it is preferable to give attitudes of thousands and tens of thousands of components by two vectors "horizontal/vertical vectors" that are easily given as common conditions.

A state where all components of a structure are arranged so as to share common horizontal/vertical directions is a completed state of the structure. That is, where reference lines of components are provided in the horizontal direction/vertical direction, and the reference lines of two components to be joined are coincident in the horizontal direction/vertical direction, it is said to be an appropriate pre-joint condition. Since the reference lines of two components will not be coincident before joining, it is sufficient to move both so as to reduce a vector difference between the reference lines thereof. Since the attitude changes due to the movement, it is ideal that an electronic tag with an attitude sensor for measuring the attitude data in real time is disposed on the structural component, and a moving means is feedback controlled in real time.

That is, the present invention (Claim 1) is a structure assembling method for assembling a structure by moving and coupling a plurality of structural components each disposed with an electronic tag that is provided with an attitude sensor and remotely transmits attitude data detected by the attitude sensor, wherein attitude data remotely transmitted by the electronic tag with an attitude sensor disposed on a structural component is an attitude of a reference line of the structural component with respect to a design reference line direction of a completed structure, the attitude data is received by electronic tags with attitude sensors on two structural components to be joined, and one of the structural components is moved in a direction to reduce a difference in attitude data of the two to-be-joined structural components and joined for assembly. It is preferable that the electronic tag with an attitude sensor disposed on a structural component is made freely attachable and detachable as described in Patent Document 7.

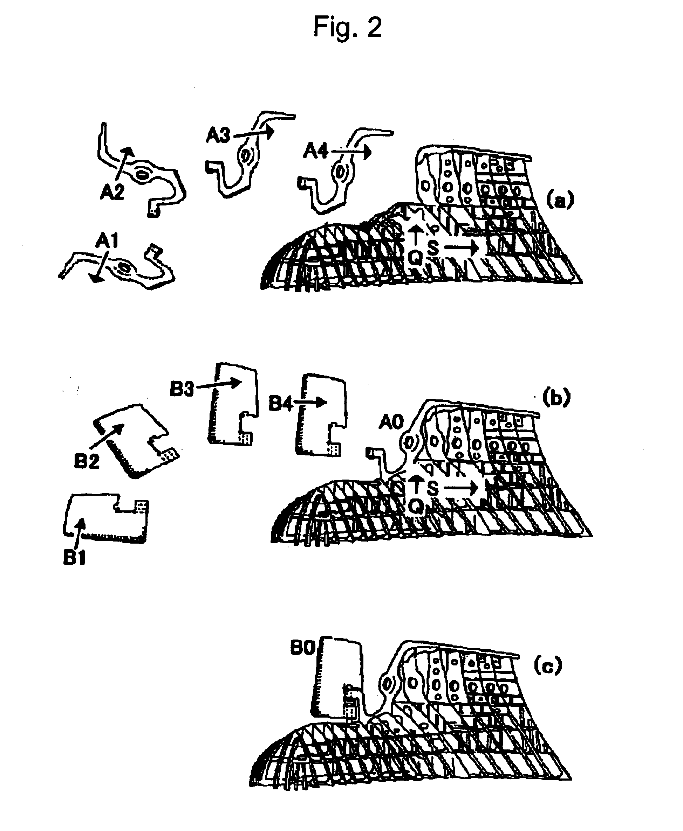

Fig. 2(a) is an example of movement from A1, A2, A3, to A4 so as to reduce a difference in a reference line vector of a propeller supporting component with respect to a horizontal straight proceeding direction vector S (horizontal reference line) of a vessel. The horizontal straight proceeding direction vector S of a vessel is given by a structural member (another member that has already been joined) to which the propeller supporting component is joined (illustration is omitted). A vertical upward direction vector Q is also given by the structural member (already joined) to which the propeller supporting component is joined, and the propeller supporting component is moved so as to reduce a difference in the vertical upward direction vector Q from a vertical upward direction vector of the propeller supporting component (Similar to the vector change concerning Q, illustration thereof is omitted).

Fig. 2(b) is an example of movement from B1, B2, B3, to B4 so as to reduce a difference between S and a reference line vector of a steering component. The horizontal straight proceeding direction vector S of a vessel is given by a structural member A0 (already joined) to which the steering component is joined (Similar to the vector change concerning Q, illustration thereof is omitted).

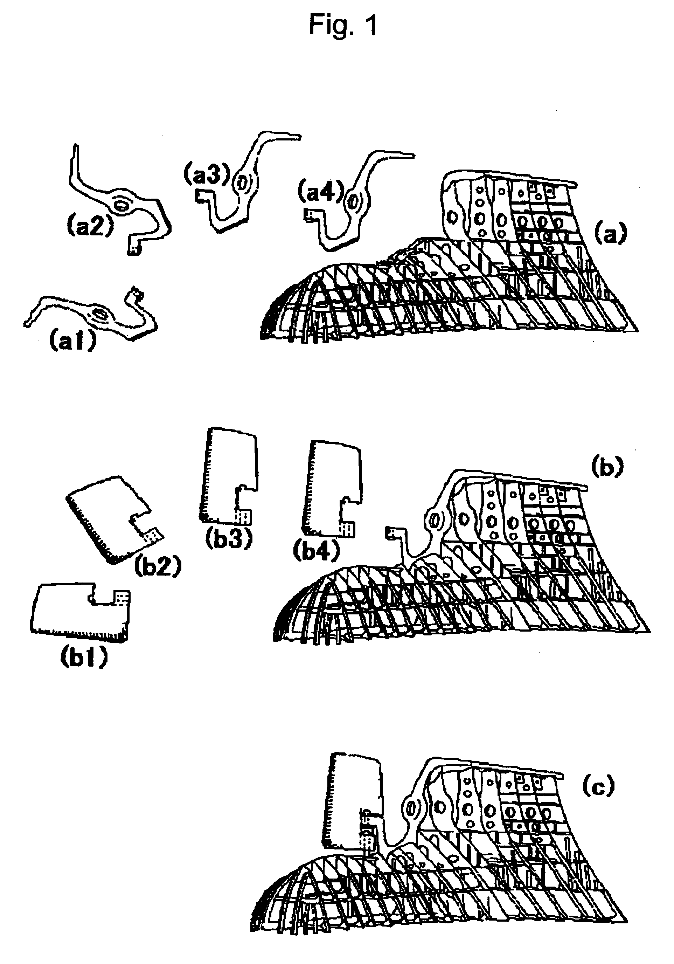

Fig. 1 are explanatory views of work to move structural components for assembly of a vessel corresponding to Fig. 2, where in Fig. 1(a), a propeller supporting component is moved from a1, a2, a3, to a4 and is joined, and in Fig. 1(b), a steering component is moved from b1, b2, b3, to b4 and is joined to the propeller supporting component joined in the previous step. Fig. 1(c) is a joint completed state.

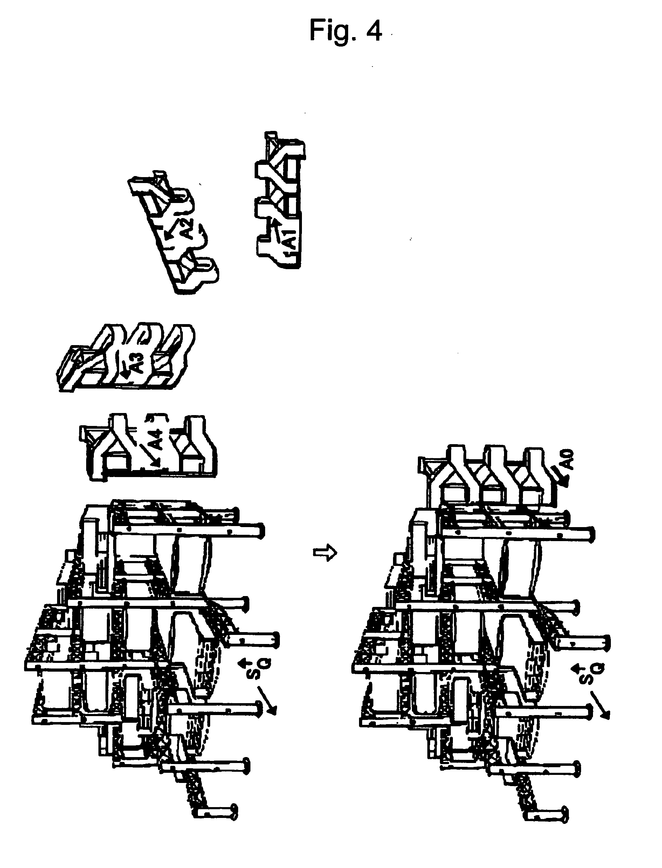

Fig. 4 is an example where an exterior stairway component is moved from A1, A2, A3, to A4 so as to reduce a difference in a reference line vector of the exterior stairway component with respect to a direction vector S (reference line) with an orientation based on a criterion of the front or back of a building. The direction vector S of an orientation based on a criterion of the front or back of a building is given by an already joined structural component (illustration is omitted). A vertical upward direction vector Q is also given by the structural member (already joined) to which the exterior stairway component is joined, and the exterior stairway component is moved so as to reduce a difference in the vertical upward direction vector Q from a vertical upward direction vector of the exterior stairway component (Similar to the vector change concerning Q, illustration thereof is omitted).

Fig. 3 is an explanatory view of work to move a structural component (exterior stairway component) for assembly of a building corresponding to Fig. 4, and is a situation view where the exterior stairway component is moved from a1, a2, a3, to a4 and is joined to building components joined in the previous step.

As shown by Q of Fig. 2 and Fig. 4, with regard to a reference line, (Claim 2) it is preferable that a design reference line direction of a completed structure is vertical upward or vertical downward, and attitude data is an angle that a reference line of a structural component forms with respect to vertical upward or vertical downward.

Moreover, with regard to a reference line, as shown by P of Fig. 2 and Fig. 4, (Claim 3) it is preferable that a reference line direction in design of a completed structure is a horizontal direction, and attitude data is an angle that a reference line of a structural component forms with respect to the horizontal reference line direction. It is ideal to have both the vertical upward or vertical downward reference line and reference line in a horizontal plane since a surface spread by two vector quantities is defined. However, since there is also a condition that automation is unnecessary for a state such as a 180-degree turn that can apparently be checked visually, it is claimed to have either both reference lines.

Concretely, with respect to a reference line, as exemplified by P of Fig. 2, (Claim 4) a completed structure is a movable object, a reference line direction in a horizontal plane is a direction in which the movable object horizontally proceeds by a forward movement or a backward movement, and attitude data is an angle that a reference line of a structural component forms with respect to the horizontal straight proceeding direction. Moreover, concretely, as exemplified by P of Fig. 4, (Claim 5) a completed structure is a building, a reference line direction in a horizontal plane is a direction based on a geographical orientation of a site of the building or a direction based on orientation of a front or back of the building, and attitude data is an angle that a reference line of a structural component forms with respect to the direction based on orientation.

### EFFECTS OF THE INVENTION

The present invention can eliminate a work mistake in structural component assembling work where a state turned 180 degrees is assumed and allows performing field joining/assembly efficiently by grasping attitude (tilt) conditions of many components in a unified manner in view of automation of an assembly work of a structure and automation of crane control. Based on the present invention, it is possible to construct a crane operation support system and an automatic assembling control system. Furthermore, although this is secondary, the present invention also allows sampling/recording (data logging) of data for maintaining an assembled structure, for example, vibration data on a multistory building at the time of an earthquake, deflection data on a vessel structure due to high waves, and the like (which will be described later).

### BRIEF DESCRIPTION OF THE DRAWINGS

[Fig. 1] Explanatory views of work to move structural components for assembly of a vessel: (a) a propeller supporting component is moved from a1, a2, a3, to a4 and is joined, (b) a steering component is moved from b1, b2, b3, to b4 and is joined to the propeller supporting component joined in the previous step, and (c) a joint completed state.
[Fig. 2] (a) a propeller supporting component is moved from A1, A2, A3, to A4 so as to reduce a difference in a reference line vector of the propeller supporting component with respect to a horizontal straight proceeding direction vector S of a vessel. The horizontal straight proceeding direction vector S of a vessel is given by a structural member (already joined) to which the propeller supporting component is joined (illustration is omitted). A vertical upward direction vector Q is also given by the structural member (already joined) to which the propeller supporting component is joined, and the propeller supporting component is moved so as to reduce a difference in the vertical upward direction vector Q from a vertical upward direction vector of the propeller supporting component. (b) A steering component is moved from B1, B2, B3, to B4 so as to reduce a difference between S and a reference line vector of the steering component. The horizontal straight proceeding direction vector S of a vessel is given by a structural member A0 (already joined) to which the steering component is joined.
[Fig. 3] An explanatory view of work to move a structural component (exterior stairway component) for assembly of a building: the exterior stairway component is moved from a1, a2, a3, to a4 and is joined to building components joined in the previous step.
[Fig. 4] An exterior stairway component is moved from A1, A2, A3, to A4 so as to reduce a difference in a reference line vector of the exterior stairway component with respect to a direction vector S of an orientation based on a criterion of the front or back of a building. The direction vector S of an orientation based on a criterion of the front or back of a building is given by an already joined structural component (illustration is omitted). A vertical upward direction vector Q is also given by the structural member (already joined) to which the exterior stairway component is joined, and the exterior stairway component is moved so as to reduce a difference in the vertical upward direction vector Q from a vertical upward direction vector of the exterior stairway component.
[Fig. 5] An explanatory view of an auxiliary device for a hanging work of Patent Document 7 (Fig. 3 of Patent Document 7 (Japanese Published Unexamined Patent Application No. 2004-067355))
[Fig. 6] Explanatory views of problems of a hanging work (Fig. 9 of Patent Document 7 (Japanese Published Unexamined Patent Application No. 2004-067355)): (a) an example where a connection surface of a structural component is tilted, and (b), where an installation surface of a structural component is not horizontal, and (c) and (d) an improper joint easily occurs when a structural component surface having an identical tilt to that of a to-be-joined target surface and located at a position symmetrical to the to-be-joined target surface.
[Fig. 7] An explanatory view of a three-axis attitude sensor and output thereof: for the three-axis attitude sensor P, deflection detecting axes of respective A-a, B-b, and C-c sensors composed of piezoelectric elements are disposed and fixed in directions not parallel to each other.

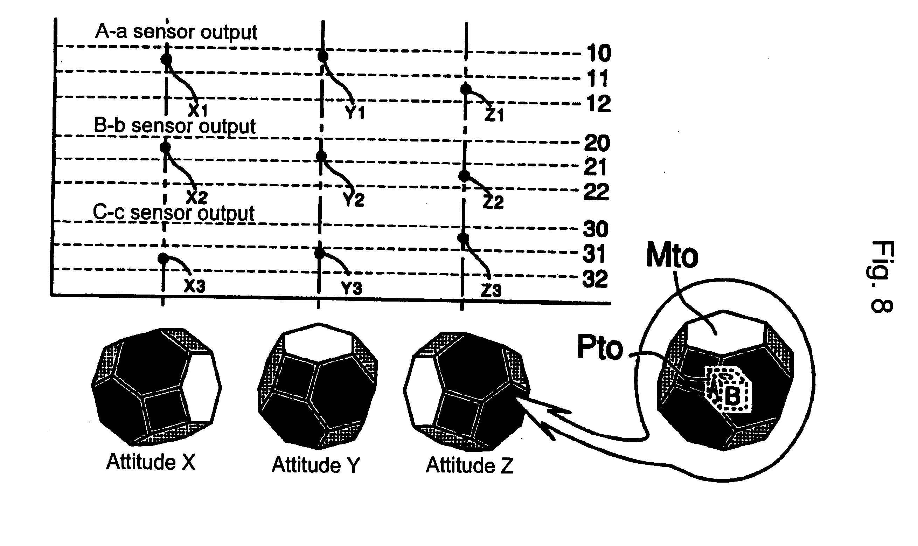

[Fig. 8] A view for explaining that a static attitude of a truncated octahedron (Mto) can be distinguished by an output of a three-axis attitude sensor (Pto) fixedly disposed inside. [Fig. 9] A block diagram of an apparatus for communicating fixed information related to an attitude of an object.

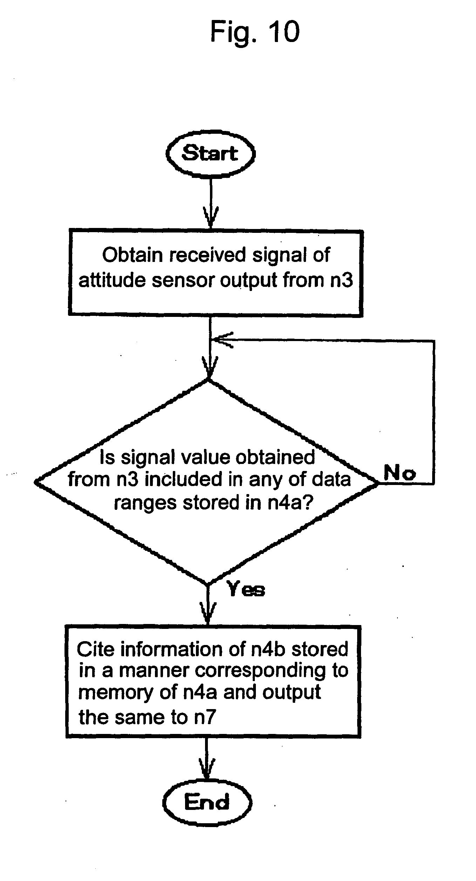

[Fig. 10] A flowchart of a process of n6 (process to output information related to an attitude of an object M).

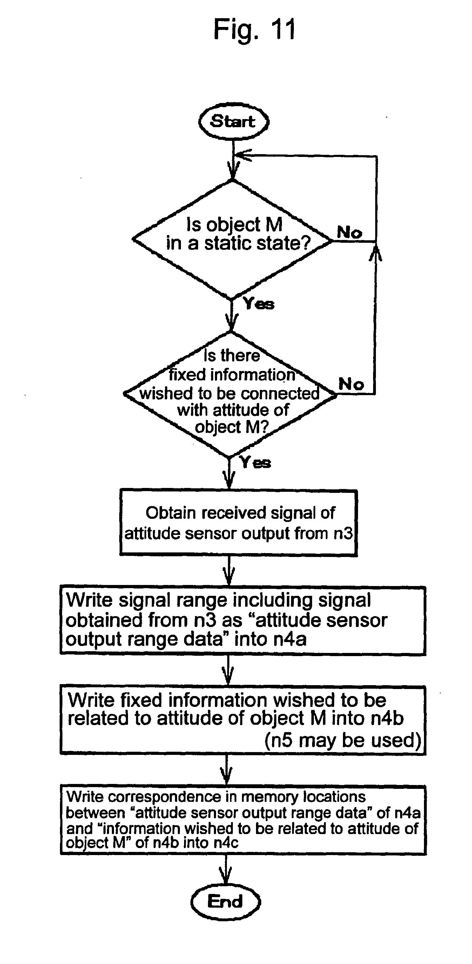

[Fig. 11] A flowchart of a process to store arbitrary information in a manner related to an attitude of an object M.

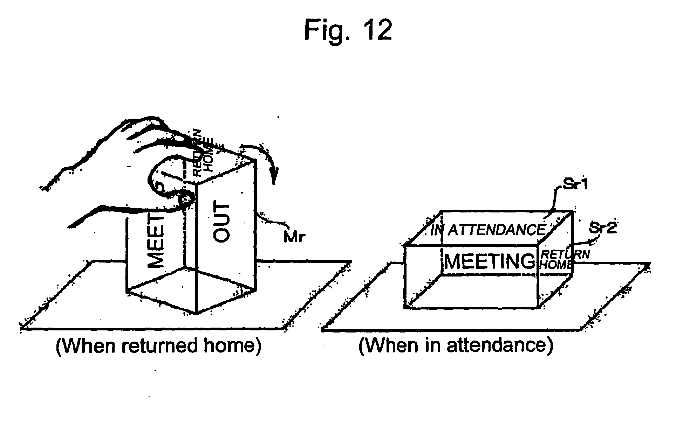

[Fig. 12] An explanatory view of an embodiment of application relating to "OUT," "MEETING," "ATTENDANCE," "RETURNED HOME," and other information and voluntary notification of whereabouts or service management of an office worker depending on an attitude of a partial surface of a rectangular parallelepiped (hexahedron) Mr.

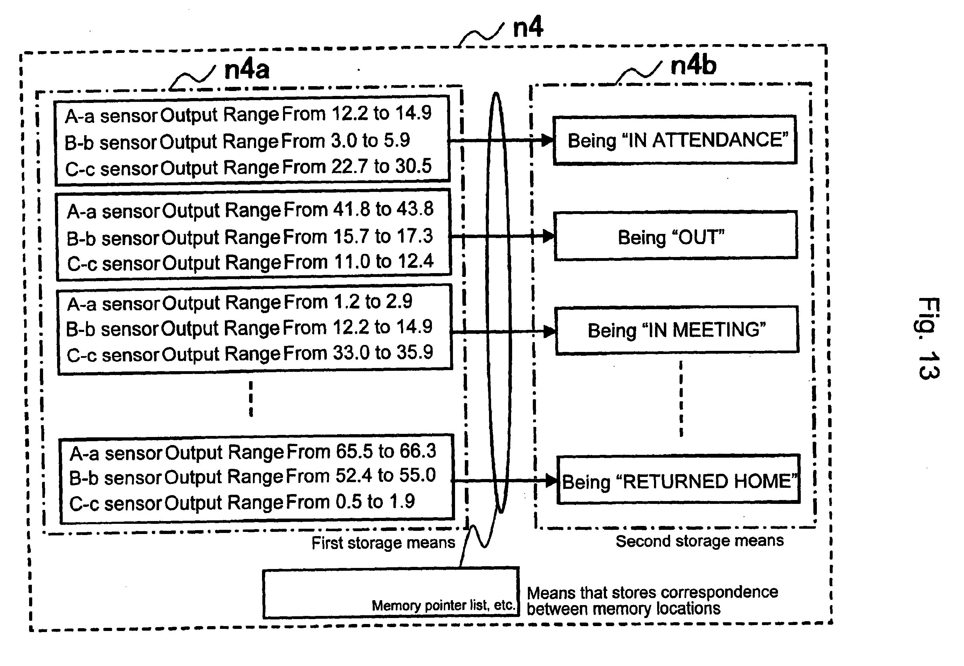

[Fig. 13] An explanatory view of n4 (a storage means having n4a, n4b, and n4c).

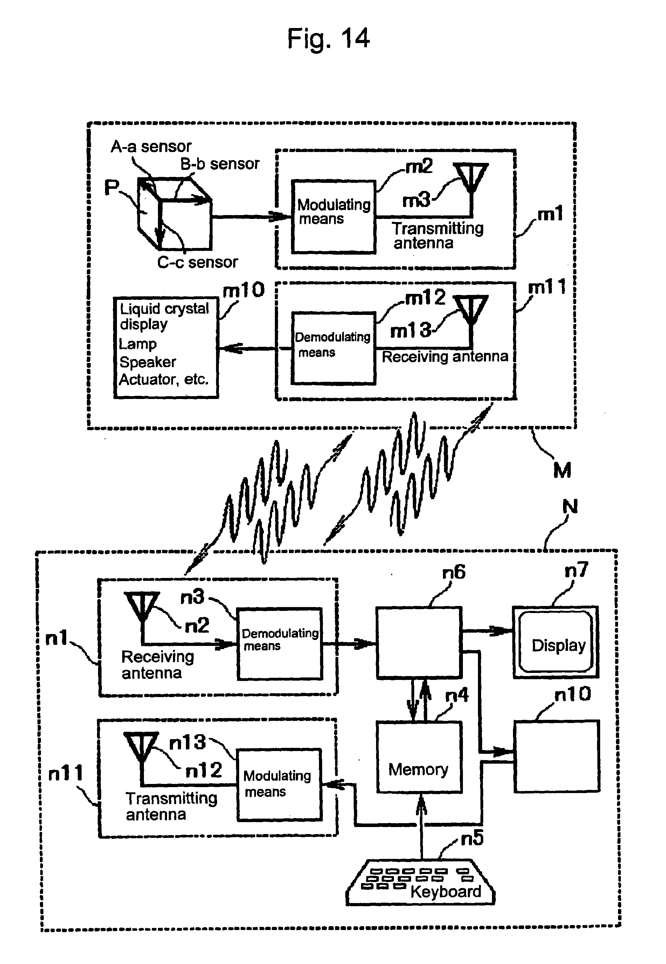

[Fig. 14] A block diagram of an apparatus for communicating fixed information related to an attitude of an object.

### DESCRIPTION OF REFERENCE NUMERALS

10: Output of an A-a axis deflection detecting element when the A-a axis is in a vertical attitude of "A is above" 11: Output of an A-a axis deflection detecting element when the A-a axis is in a horizontal attitude
12: Output of an A-a axis deflection detecting element when the A-a axis is in a vertical attitude of "a is above"
20: Output of a B-b axis deflection detecting element when the B-b axis is in a vertical attitude of "B is above"
21: Output of a B-b axis deflection detecting element when the B-b axis is in a horizontal attitude
22: Output of a B-b axis deflection detecting element when the B-b axis is in a vertical attitude of "b is above"
30: Output of a C-c axis deflection detecting element when the C-c axis is in a vertical attitude of "C is above"
31: Output of a C-c axis deflection detecting element when the C-c axis is in a horizontal attitude
32: Output of a C-c axis deflection detecting element when the C-c axis is in a vertical attitude of "c is above"
m1: Means that remotely transmits an attitude sensor output
m2: Modulating means that modulates an attitude sensor output to radio wave signals (loaded with that information)
m3: Radio wave signal transmitting antenna
m10: Means that outputs secondary information (such as a liquid crystal display, a lamp (light-emitting diode), a speaker, or the like)
or an actuator driven based on secondary information
m11: Means that receives secondary information signals
m12: Means that demodulates received radio waves to obtain signals corresponding to secondary information signals loaded on the radio waves
m13: Radio wave receiving antenna
Mr: Example of an object M that takes a plurality of static attitudes, the object is a rectangular parallel piped (hexahedron)
Mto: Example of an object M that takes a plurality of static attitudes, the object is a truncated octahedron
N: Station isolated from an object M
n1: Receiving means that receives attitude sensor signals
n2: Radio wave receiving antenna
n3: Means that demodulates received radio waves to obtain signals corresponding to an attitude sensor output loaded on the radio waves
n4: Storage means having n4a, n4b, and n4c
n4a: First storage means that stores range data of an attitude sensor output when an object M is static
n4b: Second storage means in which fixed information to be related to an attitude of an object M is stored in a manner corresponding to memory of the first storage means
n4c: Means that stores correspondence between a memory location of the output range data of n4a and a memory location of the information of n4b
n5: Means that writes and corrects memory information of n4 as necessary
n6: Means that judges as to whether the signals of n3 are included in the range of the output range data of n4a and cites, if included, the fixed information of n4b stored in a manner corresponding to the memory of n4a
n7: Display means such as a liquid crystal display monitor that outputs the information of n4b cited by n6
n10: Means that obtains secondary information based on fixed information related to an attitude of an object M
n11: Means that remotely transmits secondary information
n12: Radio wave signal transmitting antenna
n13: Modulating means that modulates radio wave signals of secondary information to radio wave signals (loaded with that information)
P: Three-axis attitude sensor (one-axis piezoelectric sensors A-a, B-b, and C-c are fixed with their axes orthogonal to each other)
Pto: Three-axis attitude sensor (P) fixedly disposed inside Mto
Q: Vertical upward direction vector
S: Design reference line direction vector of a completed structure; a horizontal straight proceeding direction vector in terms of a movable object structure (Fig. 2), and a direction vector of a reference horizontal orientation with regard to a front or back of a building (Fig. 4) in terms of a building structure
Sr1: Side surface (partial surface that can be distinguished visually from other surfaces) of a rectangular parallelepiped (hexahedron) whose surface is inscribed with "ATTENDED"
Sr2: Side surface (partial surface that can be distinguished visually from other surfaces) of a rectangular parallelepiped (hexahedron) whose surface is inscribed with "RETURN HOME"
X1: Output where Mto is motionless with its X-surface (unillustrated) down and an A-a sensor of Mtx is in a tilted attitude of "A is above"
X2: Output where Mto is motionless with its X-surface (unillustrated) down and a B-b sensor of Mtx is in a tilted attitude of "B is above"
X3: Output where Mto is motionless with its X-surface (unillustrated) down and a C-c sensor of Mtx is in a tilted attitude of "c is above"
Y1: Output where Mto is motionless with its Y-surface (unillustrated) down and an A-a sensor of Mtx is in a tilted attitude of "A is above"
Y2: Output where Mto is motionless with its Y-surface (unillustrated) down and a B-b sensor of Mtx is in a specific tilted attitude of "B is above"
Y3: Output where Mto is motionless with its Y-surface (unillustrated) down and a C-c sensor of Mtx is in a specific tilted attitude of "c is above"
Z1: Output where Mto is motionless with its Z-surface (unillustrated) down and an A-a sensor of Mtx is in a specific tilted attitude of "a is above"
Z2: Output where Mto is motionless with its Z-surface (unillustrated) down and a B-b sensor of Mtx is in a specific tilted attitude of "b is above"
Z3: Output where Mto is motionless with its Z-surface (unillustrated) down and a C-c sensor of Mtx is in a specific tilted attitude of "C is above"

### BEST MODE FOR CARRYING OUT THE INVENTION

As a mode for carrying out the present invention, an apparatus to execute the aforementioned structure assembling method will be described. Simultaneously, a data sampling/recording (data logging) device of data including, for example, vibration data on a multistory building at the time of an earthquake, deflection data on a vessel structure due to high waves, and the like, for maintaining an assembled structure will be described.

The present invention apparatus (Claim 6) is a structure assembling apparatus used for a structure assembling method using an electronic tag with an attitude sensor being the aforementioned method (Claim 1), including: a receiving means for remotely receiving data remotely transmitted by an electronic tag with an attitude sensor; a means for calculating a difference between an attitude data received value of one structural component and an attitude data received value of another structural component; and a means for issuing a command to move the structural component in a direction to reduce the difference.

Moreover, a data sampling/recording (data logging) device of the present invention (claim 7) is storage of data concerning a structure assembled by the structure assembling method using an electronic tag with an attitude sensor being the aforementioned method (Claim 1), including : a receiving means for receiving attitude data remotely transmitted by an electronic tag with an attitude sensor disposed on a structural component of an assembled structure; and a storage means for storing data received by the receiving means and a structural component position of an attitude sensor being a transmitter of the data in a related manner. This is for leaving the electronic tag with an attitude sensor used at the time of assembling disposed as it is and using the same as a data collecting sensor for structure maintenance after assembling.

In particular, parts where warpage, distortion, and camber come into question must be joined carefully at the time of assembling as well. For example, a propeller shaft of a vessel and the periphery of a fundamental structure of a multistory building fall under such parts, and a so-called high-precision alignment work is carried out. For supporting the alignment work, it is sufficient to attach a large number of electronic tags with attitude sensors. The electronic tags with attitude sensors monitor a state of deformation of structural components, so as to join these while monitoring the state of deformation with reference to the data. It is sufficient to cause some of the sensors to remain for monitoring a state of deformation also after completion of joining. It is preferable to cause the same sensors to remain and sample/record (data logging) maintenance data after installation since it allows making a response from the time of installation.

In terms of a multistory building, it is also important to grasp earthquake vibration damage. An attitude sensor using an individual having a piezoelectric effect is also capable of detecting acceleration and therefore becomes, for example, a device that observes an earthquake vibration (vibrational energy) at a desired part of a structure when taking advantage thereof. That is (Claim 8), the device is storage of data concerning a structure, being a device that stores data concerning a structure assembled by the structure assembling method using an electronic tag with an attitude sensor being the aforementioned method (Claim 1), the attitude sensor simultaneously having an acceleration outputting function, including: a receiving means for receiving acceleration data remotely transmitted by an electronic tag with an attitude sensor disposed on a structural component of an assembled structure; and a storage means for storing data received by the receiving means and a structural component position of an attitude sensor being a transmitter of the data in a related manner.

It is also possible to estimate earthquake damage by (claim 9) further including an operation means for calculating an mechanical energy given to a structural component of a structure based on acceleration output data of an attitude sensor and a means for storing a result of the operation in a manner related to an in-structure position of the structural component.

Hereinafter, with regard to Patent Document 8, description will be added as an example of an electronic tag with an attitude sensor used by the present invention. An object M hereinafter described is the above-described electronic tag with an attitude sensor itself, a structural component disposed with an electronic tag with an attitude sensor, or an electrical and electronic apparatus equipped on a structural component while including an electronic tag with an attitude sensor as a center element. The apparatus of Patent Document 8 is an apparatus that outputs fixed information related to an attitude of an object M to take a plurality of attitudes at a station N isolated from the object M, and the object M is provided with a (three-axis) attitude sensor P, a modulating means m2 that modulates a (three-axis) attitude sensor output to radio wave signals, and a radio wave transmitting means m3 having an antenna, and the isolated station N is provided with a receiving means n2 having an antenna that remotely receives the radio waves, a means n3 that demodulates received radio waves, and a storage means n4 having n4a, n4b, and n4c (see Fig. 9). Here, reference symbol n4a denotes a first storage means that stores a range data of an attitude sensor output when the object M is static, reference symbol n4b denotes a second storage means in which fixed information related to an attitude of the object M is stored in a manner corresponding to memory of the first storage means, and reference symbol n4c denotes a means that stores correspondence between memory locations of the output range data of n4a and memory locations of the information of n4b as addresses, pointers, or the like.

Furthermore, the isolated station N is provided with a following means n6. That is, provided is a means that judges as to whether received signals of the receiving means n2 are included in one range of the output range data stored in the first storage means n4a and cites, when included, the fixed information in the second storage means n4b stored in a manner corresponding to the output range data of the first storage means and a means n7 that outputs (displays) the cited fixed information to a liquid crystal display monitor or the like.

Here, memory writing of the storage means n4 will be described with a flowchart of Fig. 11. First, suppose that 'Is object M in a static state?' and 'Is there fixed information wished to be connected with attitude of object M?' are both Yes. In this condition, 'Obtain received signal of attitude sensor output from n3' at the isolated station N.

The received signal is an attitude sensor signal corresponding to a static state of the object M. Then, in order to ease a judgment to be described later, a range with appropriate margins before and after the signal value is provided as "attitude sensor output range data," and 'Write signal range including signal obtained from n3 as "attitude sensor output range data" into n4a." Simultaneously therewith, 'Write fixed information wished to be related to attitude of object M into n4b.' Furthermore, 'Write correspondence in memory locations between "attitude sensor output range data" of n4a and "information wished to be related to attitude of object M" of n4b into n4c,' thus three writing operations are carried out. For these writing operations, a means n5 that carries out writing and correction is used, if necessary. States of the storage means n4 (storage means having n4a, n4b, and n4c) for which writing has been completed are exemplified in Fig. 13.

The example of Fig. 13 is an example where fixed information related to an attitude of the object Mr of Fig. 12 is "ATTENDANCE," "OUT," "MEETING," and "RETURNED HOME," and the fixed information can be any. In the present invention, it is convenient to write a description related to unique attitudes of individual structural components such as, for example, an "attitude of a steering component" and an "attitude of a prefabricated exterior stairway" and establish correspondence to actual attitude data in advance. Such description can be displayed on an on-site monitor or outputted as audio when a relevant remote attitude signal has been received.

It is possible to dispose an electronic tag with an attitude sensor of the present invention on a structural component having an arbitrary shape. As a simple example of disposition, Fig. 8 is an example where the object M is a polyhedron Mto called a truncated octahedron, and a three-axis attitude sensor (Pto) is fixedly disposed inside Mto. In a manner corresponding to an attitude X, an attitude Y, and an attitude Z, different attitude outputs (X1, X2, X3), (Y1, Y2, Y3), and (Z1, Z2, Z3) are outputted from the internal attitude sensor Pto, respectively, and this is transmitted at m2 and m3 (illustration is omitted).

After carrying out the memory writing operations in the flow of Fig. 11, when the object M has became a specific attitude related to fixed information in the flow of Fig. 11, the fixed information is outputted and displayed at the isolated station N. To explain a process (process of n6) at the isolated station N by use of a flowchart of Fig. 10, first, a process 'obtain received signal from n3' is carried out, next, 'Is value of received signal from n3 is included in data range stored in n4a?' is judged, and if this turns out to be Yes, 'Cite information of n4b stored in a manner corresponding to memory of n4a and output the same to n7.'

The above mode has been of a unidirectional communication from the object M to the station N, however, a mode of a bidirectional communication between the object M and station N is also effective. A configuration thereof is the so-far explained configuration of a unidirectional communication added further with the following constituent elements (see Fig. 14).

That is, the object M is an electrical and electronic apparatus equipped on a structural component while including an electronic tag with an attitude sensor as a center element, and is configured (Claim 2 of Patent Document 8) to further include a means n10 for obtaining secondary information based on fixed information cited by the process of n6 at the isolated station N, a means n11 for remotely transmitting the secondary information, a receiving means m11 for receiving a remotely transmitted signal of the secondary information at the object M, and an output means m10 for the secondary information. The means n10 for obtaining secondary information is, for example, "the third storage means for storing an expected signal reception pattern in advance and the means for judging and outputting a difference (secondary information) between the expected signal reception pattern and an actual reception pattern" described above.

It is preferable to output secondary information as an automatic control command/control state concerning unique attitudes of individual structural components such as "attitude check completion of a steering component," "attitude check completion of a prefabricated exterior stairway," "in a fall of a steering component," and "in a turn of a prefabricated exterior stairway" by disposing an audio output means or an optical signal output means on the object M. That is, by an audio output means or an optical signal output means simultaneously included in an electrical and electronic apparatus (object M) equipped on a structural component while including an electronic tag with an attitude sensor as a center element, information concerning unique attitudes of individual structural components is outputted and transmitted from the structural components to an operator carrying out an assembly work (high-precision alignment work) at the site. This is convenient and safe as the state of a structural member can be grasped in real time (End of an additional description concerning Patent Document 8).

## Claims

1. A structure assembling method for assembling a structure by moving and joining a plurality of structural components each disposed with an electronic tag that is provided with an attitude sensor and remotely transmits attitude data detected by the attitude sensor, wherein
attitude data remotely transmitted by the electronic tag with attitude sensor disposed on a structural component is an attitude of a reference line of the structural component with respect to a design reference line direction of a completed structure,
the attitude data is received by electronic tags with attitude sensors on two structural components to be joined, and
one of the structural components is moved in a direction to reduce a difference in attitude data of the two to-be-joined structural components and joined for assembly.

2. The structure assembling method using an electronic tag with an attitude sensor according to Claim 1, wherein
a design reference line direction of the completed structure is vertical upward or vertical downward, and the attitude data is an angle that a reference line of the structural component forms with respect to vertical upward or vertical downward.

3. The structure assembling method using an electronic tag with an attitude sensor according to Claim 1, wherein
a reference line direction in design of the completed structure is a horizontal direction, and the attitude data is an angle that a reference line of the structural component forms with respect to the horizontal reference line direction.

4. The structure assembling method using an electronic tag with an attitude sensor according to Claim 3, wherein
the completed structure is a movable object, a reference line direction in a horizontal plane is a direction in which the movable object horizontally proceeds straight, and the attitude data is an angle that a reference line of the structural component forms with respect to the horizontal straight proceeding direction.

5. The structure assembling method using an electronic tag with an attitude sensor according to Claim 3, wherein
the completed structure is a building, a reference line direction in a horizontal plane is a direction based on a geographical orientation of a site of the building or a direction based on an orientation with regard to a front or back of the building, and the attitude data is an angle that a reference line of the structural component forms with respect to the direction based on the orientation.

6. A structure assembling apparatus used for the structure assembling method using an electronic tag with an attitude sensor according to Claim 1 comprising:
a receiving means for remotely receiving data remotely transmitted by the electronic tag with attitude sensor;
a means for calculating a difference between a received attitude data of one structural component and a received attitude data of another structural component; and
a means for issuing a command to move the structural component in a direction to reduce the difference.

7. Data storage device for maintaining a structure, assembled by the method using an electronic tag with an attitude sensor according to Claim 1, comprising:
a receiving means for receiving attitude data remotely transmitted by the electronic tag with attitude sensor disposed on a structural component of an assembled structure; and
a storage means for storing data received by the receiving means and a structural component position of the attitude sensor being a transmitter of the data in a related manner.

8. Data storage device for maintaining a structure, assembled by the method using an electronic tag with an attitude sensor according to Claim 1, the attitude sensor simultaneously having an acceleration outputting function, comprising:
a receiving means for receiving acceleration data remotely transmitted by the electronic tag with attitude sensor disposed on a structural component of an assembled structure; and
a storage means for storing data received by the receiving means and a structural component position of the attitude sensor being a transmitter of the data in a related manner.

9. The data storage for maintaining a structure according to Claim 8, further comprising
a means for calculating an mechanical energy given to a structural component of a structure based on acceleration output data of the attitude sensor;
and a means for storing a result of the calculation in a manner related to a position of the structural component.
